# EUROPEAN PATENT SPECIFICATION

(11) **EP 3 336 429 B1**
(45) Date of publication and mention of the grant of the patent: **05.02.2020**
(21) Application number: 17206973.4
(22) Date of filing: 13.12.2017
(51) Int. Cl.: F23K 5/14, F23N 1/00, F23R 3/28, F02C 7/232

(54) **AN INJECTOR FOR A GAS TURBINE**
EINE EINSPRITZUNG FÜR EINE GASTURBINE
UN INJECTEUR POUR TURBINE À GAZ

(30) Priority: 13.12.2016 US 201615377970
(43) Date of publication of application: 20.06.2018
(73) Proprietor: Delavan, Inc., West Des Moines, IA 50265 (US)
(72) Inventor: MAROCCHINI, Francis P., Somers, CT Connecticut 06071 (US); BLEEKER, Daniel Edward, Ankeny, IA Iowa 50023 (US)
(74) Representative: Dehns

(56) References cited:
- EP-A1- 2 554 823
- GB-A- 692 666
- US-A1- 2009 026 398

## Description

### BACKGROUND OF THE INVENTION

### 1. Field of the Invention

The present disclosure relates to flow control, and more particularly to flow control in fuel systems such as in turbomachinery.

### 2. Description of Related Art

Gas turbine engines commonly include a compressor section connected to a turbine section by a combustion section. The compressor section ingests air from the ambient environment, compresses the ingested air, and provides the compressed air to the combustion section. The combustion section combines the compressed air with fuel to generate a flow of high pressure combustion products, which the combustion section communicates to the turbine section. The turbine section expands the flow high pressure combustion products, extracting work from the expanding combustion products and thereafter communicating the expanded combustion products to the external environment. Fuel introduction is generally by way of one or more fuel nozzles arranged in the combustion section, which provide fuel to the combustors.

The flow required by a gas turbine engine typically varies, so the fuel flow provided to the combustion section is typically controllable. Because the fuel nozzles are generally arranged in proximity to hot engine structure, fuel flow is typically controlled by devices such as diverters and manifolds positioned upstream of the fuel nozzles instead of electronic devices, which can be adversely affected by the high temperatures typically present in and around the fuel nozzle installation.

Such conventional methods and systems have generally been considered satisfactory for their intended purpose. However, there is still a need in the art for improved fluid valves, fluid injectors, and fluid systems. Prior art injectors are disclosed by GB692666, US2009/0026398 and US2562631. The present disclosure provides a solution for this need.

### SUMMARY OF THE INVENTION

A fluid valve includes a valve body with a fluid inlet and a fluid outlet, a fluid circuit extending between the fluid inlet and the fluid outlet, and a linkage. The linkage is arranged within the fluid circuit between the fluid inlet and the fluid outlet to apply effort from a solenoid actuator to a valve member, movable between first and second positions within the fluid circuit, to meter fluid flow between the fluid inlet and the fluid outlet.

In certain embodiments, the linkage can include a rocker arm. The rocker arm can be pivotally fixed relative to the valve body. The rocker arm can have an second segment and a first segment. The second segment can be longer than the first segment. The second segment can be about three times as long as the first segment. The second segment can be angled relative to the first segment. The second segment can join the first segment at an obtuse angle. The second segment can join the first segment within an angular range of between about 85 degrees and 130 degrees. The second segment can join the first segment at an angle that is about 120 degrees.

In accordance with certain embodiments, the second segment can include a joint. The second segment joint can be slotted. A pin or roller can be seated within slot to exert force received from a solenoid actuator on the rocker arm for moving the valve member between first and second positions. The solenoid can include a coil and a plunger. The fuel circuit can extend helically about the coil for removing heat from the coil. The coil can be arranged to drive the plunger along a drive axis. The plunger can be connected to the rocker arm by a spindle. The spindle can connect to the second segment at the second segment joint. The drive axis can intersect a valve member axis extending between the first and second positions of the valve member. The drive axis can intersect the valve member axis on a side of the second position opposite the first position. The angle can be an oblique angle.

It is also contemplated that, in accordance with certain embodiments, the first segment of the rocker arm can include a joint. The first segment joint can be slotted. A pin or roller can be seated within the slot to transmitted force received from the solenoid actuator to the valve member, the actuator thereby being operably connected to the valve member through the linkage and rocker to move the valve member between the first and second positions. It is contemplated that the valve member can be arranged within a valve sleeve.

In contemplated embodiments, the valve sleeve can be seated within the valve body. The rocker bar can be pivotally fixed to the valve sleeve. The valve sleeve can include an anti-rotation feature. The valve member can be arranged within valve sleeve. The valve sleeve can define within its interior a portion of the fluid circuit. The valve sleeve can define a seat. The seat can extend about the fluid circuit. The valve member can be movable within the valve sleeve along the valve member movement axis between the first and second positions of the valve member. In the first position, a flow area defined by the valve sleeve about the valve member can be a maximum. In the second position, the valve member can abutt the seat. The valve member and seat can cooperate such that, when in the second position, substantially no fluid flows between the fluid inlet and the fluid outlet. The valve sleeve can be arranged to schedule flow area through the valve sleeve according to position of the valve member.

The objective of the invention is solved by a fluid injector as defined in claim 1 and includes a feed arm with a fluid nozzle, fluid valve as described above, and a solenoid. The fluid valve is seated in the valve body longitudinally opposite to the fluid nozzle. A valve member is arranged within the valve member along a movement axis defined between a first position and a second position. The solenoid is seated within the valve body, is operably connected to the valve member by the linkage for moving the valve member between the first position and the second position, and is angled relative to the movement axis to provide a compact injector arrangement. The rocker arm includes a first segment and a second segment which is longer than the first segment, the first segment being angled relative to the second segment.

A fuel system includes a first fluid injector and one or more second fluid injectors as described above. The first and one or more second fluid injectors have a fluid circuit extending between the fluid inlet and the fluid outlet and include a solenoid and a metering valve. The fluid circuits of the first and one or more second fluid injectors extend about the solenoid to provide cooling thereto using flow flowing from the fuel source. The metering valves of the first and one or more second fluid injectors include valve members arranged along the fluid circuit and are operatively connected by a linkage to the solenoid to move the valve members between first and second positions. A scheduler is connected to the solenoid of the first and the one or more second fluid injectors to vary fuel flow through the first fluid injector independent of fuel flow through the one or more second fluid injector.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a schematic view of an exemplary embodiment of a fluid injector constructed in accordance with the present disclosure, showing the fluid injector arranged in a gas turbine;
Fig. 2 is a cross-sectional side view of a fluid injector of Fig. 1, showing the injector seated within a combustor for independent issue fluid into the combustor via electronic metering;
Fig. 3 is a side elevation view of the fluid injector of Fig. 1, showing a valve body with metering and actuator portions angled relative to one another and relative to a feed arm portion of the valve body;
Fig. 4 is a cross-sectional side view of the fluid injector of Fig. 1, showing a fluid circuit extending through the fluid injector and through an electronically actuated metering valve;
Fig. 5 is a cross-sectional side view of a portion of the fluid injector of Fig. 1, showing a solenoid actuator and a metering valve each seated within the fluid injector and interconnected by a linkage;
Fig. 6 is a cross-sectional side view of a portion of the fluid injector of Fig. 5, showing a rocker arm of the linkage pivotally fixed relative to the valve body;
Figs. 7 and 8 are cross-sectional side views of a portion of the fluid injector of Fig. 1, showing a valve member in first and second position; and
Figs. 9 and 10 are perspective views of a portion of the fluid injector of Fig. 1, showing an anti-rotation feature fixing a metering valve within the fluid injector.

### DETAILED DESCRIPTION OF THE PREFERRED EMBODIMENTS

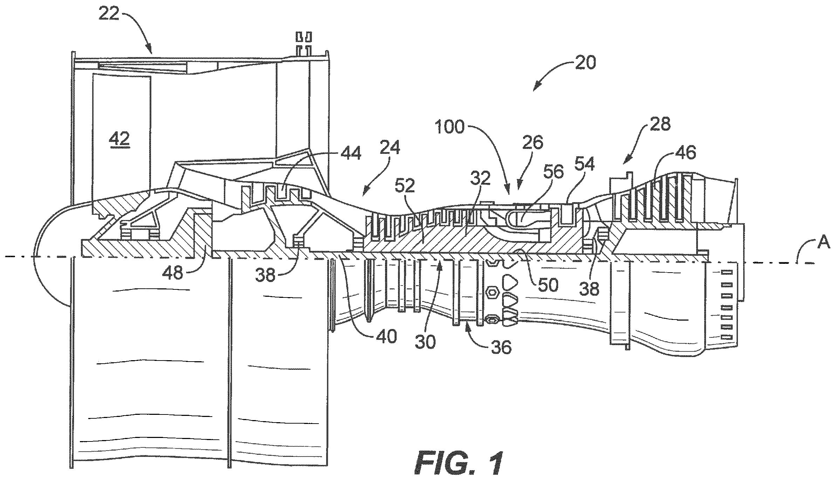

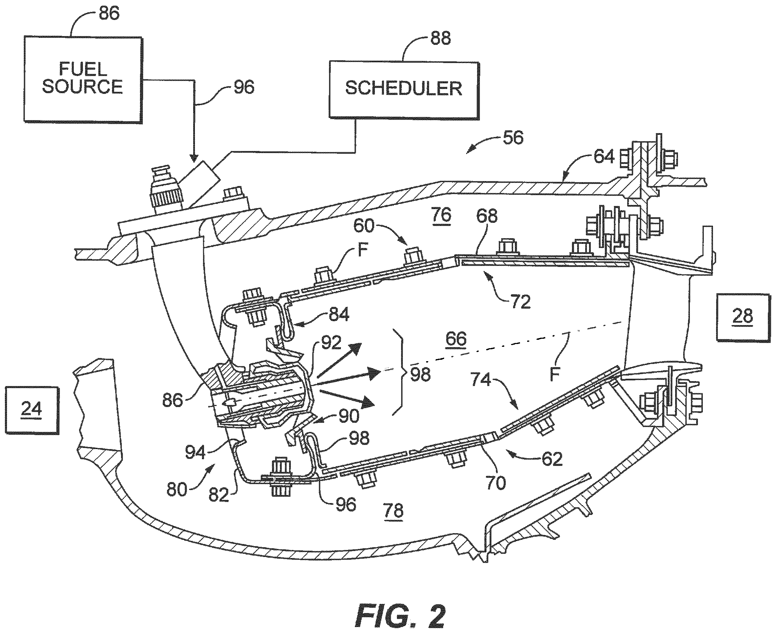

Reference will now be made to the drawings wherein like reference numerals identify similar structural features or aspects of the subject disclosure. For purposes of explanation and illustration, and not limitation, a partial view of an exemplary embodiment of a fluid valve in accordance with the disclosure is shown in Fig. 1 and is designated generally by reference character 100. Other embodiments of fluid valves, fluid injectors, and fluid metering systems in accordance with the disclosure, or aspects thereof, are provided in Figs. 2-10, as will be described. The systems and methods described herein can be used in fuel systems, such as in gas turbine engines, though the present disclosure is not limited to gas turbine engines or to fuel system in general. As used herein the term fluid includes liquids, gases, and/or mixtures of liquid and gases.

Referring to Fig. 1, gas turbine engine 20 is shown. The gas turbine engine 20 is disclosed herein as a two-spool turbofan that generally incorporates a fan section 22, a compressor section 24, a combustor section 26 and a turbine section 28. Alternative engines might include an augmenter section (not shown) among other systems or features. The fan section 22 drives air along a bypass flowpath while the compressor section 24 drives air along a core flowpath for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines.

Gas turbine engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that interconnects a fan 42, a low pressure compressor 44 and a low pressure turbine 46. The inner shaft 40 is connected to the fan 42 through a geared architecture 48 to drive the fan 42 at a lower speed than the low speed spool 30. The high speed spool 32 includes an outer shaft 50 that interconnects a high pressure compressor 52 and high pressure turbine 54. A combustor 56 with one or more fluid injectors 100 is arranged between the high pressure compressor 52 and the high pressure turbine 54. The inner shaft 40 and the outer shaft 50 are concentric and rotate about the engine central longitudinal axis A which is collinear with their longitudinal axes.

The core airflow is compressed by the low pressure compressor 44 then the high pressure compressor 52, mixed and burned with fuel introduced therein through the one or more fluid injectors 100 within the combustor 56, then expanded over the high pressure turbine 54 and low pressure turbine 46. The high pressure turbine 54 and the low pressure turbine 46 rotationally drive the respective low speed spool 30 and high speed spool 32 in response to the expansion.

With reference to Fig. 2, combustor 56 is shown. The combustor 56 generally includes an outer liner 60 and an inner liner 62 disposed within a combustor case 64. An annular combustion chamber 66 is defined between the outer liner 60 and the inner liner 62. It should be understood that although a particular combustor is illustrated, other combustor types with various liner panel arrangements will also benefit from the present disclosure.

The outer liner 60 and the combustor case 64 define an outer annular plenum 76 and the inner liner 62 and the combustor case 64 define an inner annular plenum 78. The outer liner 60 and inner liner 62 contain the flame for direction toward the turbine section 28 (shown in Fig. 1). The outer liner 60 and the inner liner 62 generally includes a support shell, e.g., an outer support shell 68 and an inner support shell 70, which supports one or more liner panels, e.g., liner panel 72 and liner panel 74, which are mounted to a hot side of the respective outer support shell 68 and inner support shell 70. The liner panel defines a liner panel array which may be generally annular in shape. Each of the liner panels may be generally rectilinear and manufactured of, for example, a nickel based super alloy or ceramic material.

The combustor 56 further includes a forward assembly 80 immediately downstream of the compressor section 24 to receive compressed airflow therefrom. The forward assembly 80 generally includes an annular hood 82, a bulkhead assembly 84, the one or more fluid injectors 100 (only one shown for reasons of clarity) and nozzle guides 90 (only one shown for reasons of clarity) which define a central opening 92. The annular hood 82 extends radially between, and is secured to, the forwardmost ends of the outer liner 60 and the inner liner 62. The annular hood 82 includes a multiple of circumferentially distributed hood ports 94 that accommodate the fluid injector 100 and introduce air into the forward end of the combustion chamber 66. Each fluid injector 100 projects through one of the hood ports 94 and through the central opening 92 within the respective nozzle guide 90 along a nozzle axis F.

In the illustrated exemplary embodiment, a liquid fuel source 86 is in fluid communication with fluid injector 100 and provides thereto a flow of fuel 96, which fluid injector 100 issues into combustor 56 as a scheduled fuel flow 98 according to a scheduling current applied to fluid injector 100 by scheduler 88 connected to fluid injector 100 for generation of high pressure combustion products. This is for illustration purpose only and is non-limiting. It is contemplated that fuel source 86 may be gaseous fuel source or a fuel source providing a mixture of liquid and gaseous fuel, as suitable for an intended application.

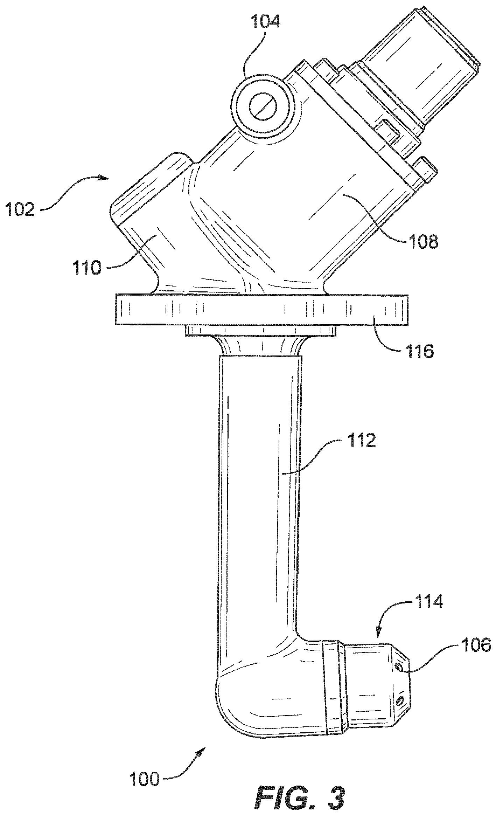

With reference to Fig. 3, fluid injector 100 is shown. Fluid injector 100 includes a valve body 102. Valve body 102 has a fluid inlet 104 and a fluid outlet 106 arranged on longitudinally opposite ends of fluid injector 100, and includes an actuator portion 108, a metering portion 110, a feed arm portion 112, and a nozzle portion 114. A mounting flange 116 extends about valve body 102 between feed arm portion 112 and metering portion 110, mounting flange 116 being arranged to fix fluid injector 100 to combustor 56 (shown in Fig. 2).

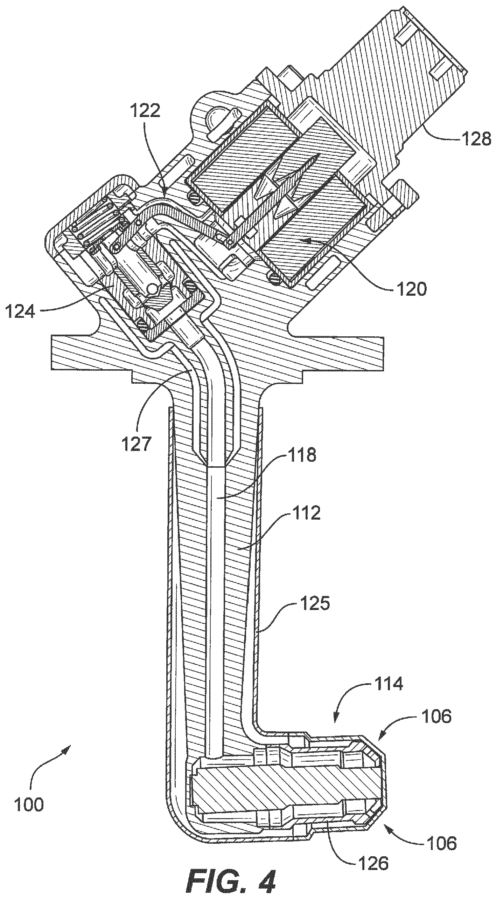

Fluid inlet 104 is in selective fluid communication with fluid outlet 106 through a fluid circuit 118 (shown in Fig. 4) extending through actuator portion 108, metering portion 110, feed arm portion 112, and nozzle portion 114. Fluid outlet 106 is arranged on nozzle portion 114, and is angled relative to feed arm portion 112 an arranged to issue fluid from fluid circuit 118 as a liquid spray with a conical shape into combustor 56 (shown in Fig. 2).

Metering portion 110 is angled relative to feed arm portion 112 and is connected to feed arm portion 112 on a side of mounting flange 116 opposite nozzle portion 114. Fluid inlet 104 is arranged on actuator portion 108, which is angled relative to both metering portion 110 and feed arm portion 112. In the illustrated exemplary embodiment metering portion 110 is angled relative to feed arm portion at about a 45 degree angle and actuator portion 108 is angled relative to metering portion by about a 90 degree angle, providing a relatively compact fluid injector arrangement and providing suitable spacing of actuator portion 108 from nozzle portion 114 to thermally protect electronic components disposed therein, as will be described.

Valve body 102 may be fabricated, for example, by an additive manufacturing technique such as powder bed fusion or laser sintering by way of non-limiting example. It is also contemplated that valve body 102 may fabricated by using both an additive manufacturing technique and a subtractive technique, bores being defined in either or both of actuator portion 108 and metering portion 110 using a milling or drilling subsequent to monolithic structures being formed using an additive manufacturing technique.

With reference to Fig. 4, fluid injector 100 is shown in a cross-sectional side view. Fluid injector 100 includes within its interior an actuator 120, a linkage 122, a metering valve 124, and a nozzle 126. Linkage 122, metering valve 124, and nozzle 126 are each arranged in series with one another along fluid circuit 118, linkage 122 being disposed within a segment of fluid circuit 118 and metering valve 124 bounding a segment of fluid circuit 118 downstream of linkage 122. Feed arm portion 112 includes a heat shield 125, which overlaps an insulative gap 127 defined within valve body 102 extending about a portion of metering valve 124 and a portion of fluid circuit 118 disposed within feed arm portion 112.

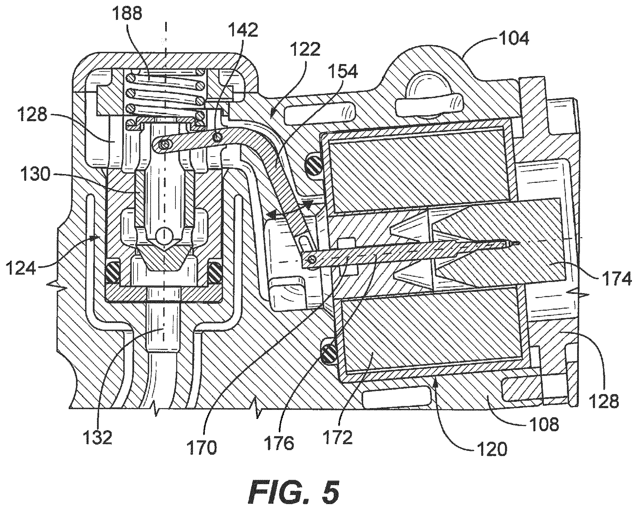

With reference to Fig. 5, actuator 120 is shown. Actuator 120 is seated within valve body actuator portion 108. Actuator 120 is operably connected to metering valve 124 through linkage 122 to provide independent metering of fluid flow through fluid injector 100. In this respect, for a given pressure of fluid provided at fluid inlet 104, actuator 120 is arranged to alter flow rate of fluid issue from fluid outlet 106 (shown in Fig. 3) according to a predetermined schedule using electrical current or voltage as the driving input applied to actuator 120, the current or voltage being applied via a coupling 128 seated on an end of valve body actuator portion 108 disposed thereon on a side opposite valve body metering portion 110 by scheduler 88 (shown in Fig. 2).

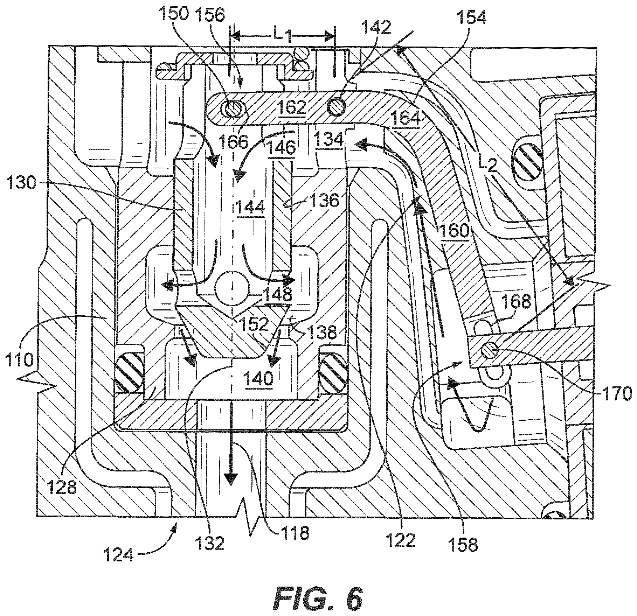

With reference to Fig. 6, metering valve 124 is shown. Metering valve 124 is seated within valve body metering portion 110 and includes a valve sleeve 128 and a valve member 130. Valve sleeve 128 defines a load axis 132 and has an inlet port 134, a member guide 136, a member seat 138, and an outlet port 140. A fulcrum pin 142 is seated inlet port 134, is fixed relative to valve sleeve 128, and pivotally seats linkage 122 relative to valve sleeve 128. Member guide 136 is defined within valve sleeve 128 along fluid circuit 118 downstream (relative to fluid flow) of inlet port 134, and extends axially along load axis 132. Member seat 138 is defined within valve sleeve 128 along fluid circuit 118 downstream of member guide 136, and extends about load axis 132. Outlet port 140 is arranged downstream of member seat 138 along fluid circuit 118, and is in fluid communication with fluid outlet 106 through valve body feed arm portion 112.

Valve member 130 has a hollow interior 144 fluidly coupling an inlet window 146 and an outlet window 148. Inlet window 146 is downstream of inlet port 134 along fluid circuit 118 and is suitable sized such that linkage 122 can be received therethrough to slidably seat on a load joint pin 150, which is fixed relative to valve member 130. Outlet window 148 is arranged downstream of inlet window 146 and upstream of outlet port 140 along fluid circuit 118, and is in fluid communication with inlet port 134 through inlet window 146. On an end opposite inlet window 146 valve member 130 has an exterior conical surface 152, at least a portion of which is a conjugate of valve sleeve member seat 138. It is contemplated that either or both of conical surface 152 and member seat 138 be formed of a metallic material, such as steel or nickel alloy, providing resilience to metering valve 124 for high temperature environments.

Linkage 122 includes a rocker arm 154, a load joint 156, and an effort joint 158. Rocker arm 154 includes a first segment 162, which is arranged as load segment, connected to a second segment 160, which is arranged as an effort segment on an opposite side of a fulcrum from the load segment, by an elbow segment 164. Elbow segment 164 is connected to first segment 162 on a side of fulcrum pin 142 opposite first segment 162, and is longer than first segment 162. The longer length of first segment 162 provides mechanical advantage such that, for a given load, less force is required from actuator 120. This enables actuator 120 to be relatively small. In the illustrated exemplary embodiment, second segment 160 has a length L2 that is about three times a length L1 of first segment 160, allowing for use of relatively compact actuator 120 compared to an actuator that would be required for an unlevered arrangement.

First segment 162 includes a slot 166, which slidably receives load joint pin 150 to form load joint 156. Second segment 160 includes a slot 168, which slidably receives a spindle pin 171 to form effort joint 158. Between load joint 156 and effort joint 158 elbow segment 164 connects second segment 160 to first segment 162 at an obtuse angle, which in the illustrated exemplary embodiment about 120 degrees. Arranging second segment 160 at an obtuse angle relative first segment 162 provides for compact spacing between actuator 120 and metering valve 124 by limiting the space required for the stroke (i.e. movement) or rocker arm 154.

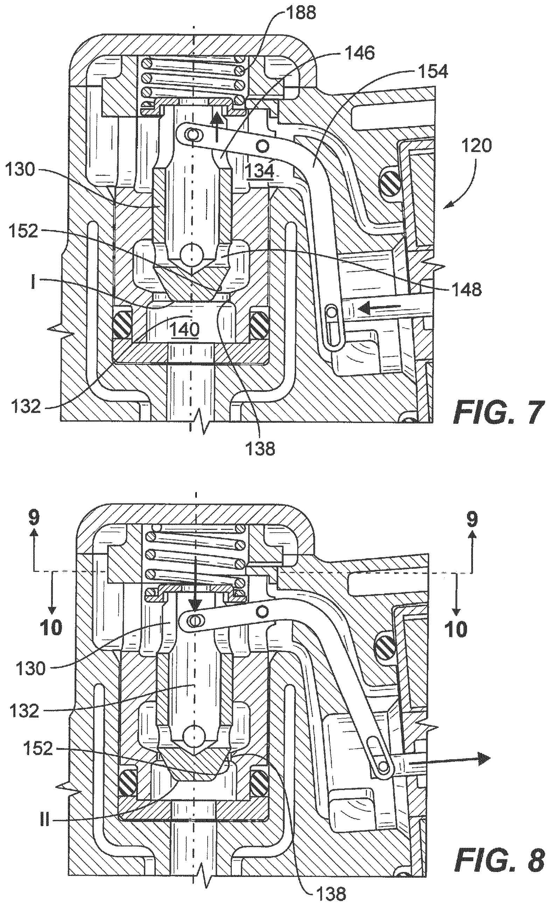

With continuing reference to Fig. 5, actuator 120 defines a drive axis 170 and includes a coil 172, a plunger 174, and a spindle 176. Coil 172 extends about drive axis 170 and is arrangement to receive electrical current from a current source (not shown for reasons of clarity). A portion of fluid circuit 118 extends helically about coil 172 and within valve body actuator portion 108 for removing heat generated by current flow through coil 172. Plunger 174 is arranged along drive axis 170 and is configured to exert effort along drive axis 170 commensurate with current provided to coil 172. Spindle 176 connects plunger 174 to effort joint 158 (shown in Fig. 6), and is arranged to communicate effort provided by plunger 174 to rocker arm 154 as plunger 174 strokes along drive axis 170, thereby pivotally displacing rocker arm 154 about fulcrum pin 142. Pivotal displacement of rocker arm 154 about fulcrum pin 142 communicates effort from plunger 174 to valve member 130, thereby moving valve member 130 axially along load axis 132 relative to valve sleeve 128. In this respect valve member 130 is movable about load axis 132 between a first position I (shown in Fig. 7) and a second position II (shown in Fig. 8).

Referring to Figs. 7 and 8, valve member 130 is shown in first position I and second position II. In first position I (shown in Fig. 7), valve member 130 is disposed along load axis 132 such that valve member conical surface 152 is separated from valve sleeve member seat 138. This places the valve sleeve inlet port 134 in fluid communication with the valve sleeve outlet port 140 through valve member hollow interior 144. In this respect fluid flow along fluid circuit 118 between fluid inlet 104 (shown in Fig. 3) and fluid outlet 106 (shown in Fig. 3) passes through valve member inlet window 146 and valve member outlet window 148. Valve member 130 arrives at first position I via effort exerted by actuator 120 towards metering valve 124 through rocker arm 154, which converts the effort into force exerted upwards (relative to the Fig. 7) along load axis 132.

In the second position II, valve member 130 is disposed along load axis 132 such that valve member conical surface 152 is closer to valve member seat 138 than when in the first position I. The relative closeness of valve member 130 and valve sleeve member seat 138 defines a minimum flow area along fluid circuit 118 that is smaller than a minimum flow area defined along fluid circuit 118 in the first position I. This reduces fluid flow along fluid circuit 118, reducing the amount of fluid that issues from fluid outlet 106 (shown in Fig. 3). Valve member 130 arrives at second position II via effort exerted by resilient member 188. It is contemplated that second position II can be one of a plurality of positions scheduled according to current or voltage applied to plunger 174, which allows resilient member 188 to overcome the effort exerted by plunger 174.

In certain embodiments, when in second position II, valve member 130 may be disposed along load axis 132 such that conical surface 152 abuts valve sleeve member seat 138. In accordance with certain embodiments, fluid outlet 106 may be fluidly isolated from fluid inlet 104 such that substantially no fluid flows through fluid circuit 118 between fluid inlet 104 and fluid outlet 106 when valve member 130 is in the second position II. As will be appreciated by those of skill in the art in view of the present disclosure, conical surface 152 may define an axially tapering profile along load axis 132 such that the minimum flow area defined within fluid circuit 118 varies in correspondence with valve member position along load axis 132, thereby providing scheduled fluid issuance from fluid outlet 106.

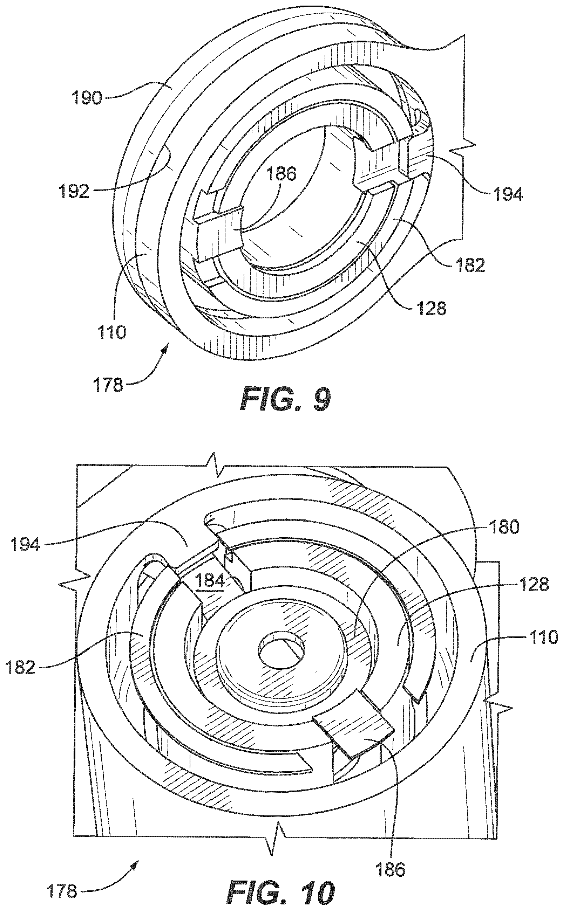

With reference to Figs. 9 and 10, an anti-rotation feature 178 of metering valve 124 (shown in Fig 4) is shown. Anti-rotation feature 178 includes a retainer 180, and a spacer 182 with a spacer key way 184 and a spacer key 186. Retainer 180 seats axially over valve member 130, and receives an end of a resilient member 188 (shown in Fig. 7). Resilient member 188 is disposed axially along load axis 132 (shown in Fig. 7) between retainer 180 and a cap 190, which is welded by a weld 192 to metering portion 110. Weld 192 provides tamper resistance, preventing access to metering valve components once the scheduling setup of metering valve 124 has been established and certified.

Spacer key 186 is received within valve sleeve 128, and fixes valve sleeve 128 in rotation relative to spacer key 186 while rending valve sleeve 128 axially free relative to spacer key 186. Spacer keyway 184, which is diametrically opposite spacer key 186, receives a key 194 defined within valve body metering portion 110, fixing spacer 182 in rotation relative to valve body metering portion 110 while leaving spacer 182 axially free relative to valve body metering portion 110. Axial freedom enables valve sleeve 128 to move axially along load axis 132 according temperature, pressure, and vibrational influences that may be exerted upon fluid injector 100 by the environs of the injector installation.

Resilient member 188, illustrated as a spring for description purposes, urges valve member 130 towards second position II along load axis 132 relative to valve sleeve 128. The force exerted by resilient member 188 enable valve member 130 are operative to position relative to valve sleeve 128 irrespective of temperature, vibration, and fluid pressure change within fluid circuit 118, fluid issue from fluid outlet 106 being according to schedule only, irrespective temperature, pressure, and vibrational influences on metering valve 124.

The methods and systems of the present disclosure, as described above and shown in the drawings, provide for fluid valves with superior properties including independent actuation for scheduled issue of fluid from one or groups of fluid valves. While the apparatus and methods of the subject disclosure have been shown and described with reference to preferred embodiments, those skilled in the art will readily appreciate that changes and/or modifications may be made thereto without departing from the scope of the subject disclosure.

## Claims

1. An injector (100) for a gas turbine engine, comprising:
a feed arm (112) with a fluid nozzle;
a metering valve (124) comprising:
a valve body (102) having a fluid inlet (104) and a fluid outlet (106);
a fluid circuit (118) defined between the fluid inlet and the fluid outlet; and
a linkage (122) disposed between the fluid inlet and the fluid outlet;
wherein the linkage includes a rocker arm (154) pivotally fixed to the valve body and within the fluid circuit and a valve member (130) moveable along a movement axis between a first position and a second position for metering a flow of fluid between the fluid inlet and the fluid outlet of the valve body for issuing fluid into a gas turbine engine,
wherein the fluid valve is seated in the feed arm, wherein the outlet of the fluid valve is in fluid communication with the fluid nozzle; and
a solenoid-type electronic actuator (120) with a coil seated within the valve body (102), wherein the solenoid defines a drive axis that is angled relative to an axis of movement of valve member such that the solenoid is spaced a distance from the nozzle and provide a compact arrangement to the injector,
wherein the rocker arm includes a first segment (162) and a second segment (160) which is longer than the first segment, the first segment being angled relative to the second segment.

2. The injector as recited in claim 1, wherein the metering valve includes a valve sleeve (128) with a seat and an anti-rotation feature, the valve member arranged within the valve sleeve, the linkage (122) being pivotally fixed to the valve sleeve.

3. The injector as recited in claim 1 or 2, wherein the valve body (102) defines an insulating gap, wherein the insulating gap extends circumferentially about the metering valve and about the fluid channel, and further comprising a heat shield extending about the feed arm and at least partially overlapping the insulating gap.

4. The injector as recited in claim 1, wherein the first position and the second position are separated by a plurality of scheduled positions for proportionally changing rate of fluid issue according to position.

5. A fuel system for a gas turbine engine, comprising: a first injector and at least one second injector as recited in claim 2, the fluid inlets of the fluid injectors being in fluid communication with a fuel source, the first fluid injector and the at least one second fluid injector comprising:
the solenoid with a coil seated within valve body (102), the fluid channel extending about the solenoid to cool the solenoid using a flow of fuel traversing the fluid channel between fluid inlet and the fluid outlet; and
the metering valve with the valve member arranged between the fluid inlet and the fluid outlet, the linkage (122) being operably connected to the valve member between a first position and a second position; and
a scheduler (88) connected to the solenoid of the first fluid injector and the at least one second fluid injector configured to vary fluid flow through the first fluid injector independent of fluid flow through the at least one second fluid injector.

6. The injector as recited in claim 1, wherein the second segment (160) is about three times as long as the first segment (162), or
wherein the first segment is angled relative to the second segment (160).

7. The injector as recited in claim 1, wherein the second segment (160) has a slotted joint to receive effort along an actuator drive axis, wherein the first segment has a slotted joint to apply the effort along a load axis.

8. The injector as recited in claim 1, wherein the first segment is angled relative to the second segment (160) within an angular range of between about 85 degrees and 130 degrees.

9. The injector as recited in claim 1, wherein the fluid valve further comprises the solenoid with the coil seated within valve body (102), the fluid channel extending around the electronic actuator to cool the electronic actuator using a flow of fluid traversing the fluid channel between fluid inlet and the fluid outlet.

10. The injector of claim 1, wherein the solenoid includes a plunger movable along a drive axis defined by the coil, wherein the linkage (122) includes a spindle arranged along the drive axis and connected to the plunger.

11. The injector as recited in claim 1, wherein the fluid inlet is fluidly isolated from the fluid outlet when the valve member is in the second position.

## Patentansprüche

1. Einspritzung (100) für einen Gasturbinenmotor, umfassend:
einen Zuführungsarm (112) mit einer Fluiddüse;
ein Dosierventil (124), umfassend:
ein Ventilgehäuse (102), das einen Fluideinlass (104) und einen Fluidauslass (106) aufweist;
einen Fluidkreislauf (118), der zwischen dem Fluideinlass und dem Fluidauslass definiert ist; und
ein Gestänge (122), das zwischen dem Fluideinlass und dem Fluidauslass angeordnet ist;
wobei das Gestänge einen Kipphebel (154), der schwenkbar an dem Ventilgehäuse befestigt ist und sich innerhalb des Fluidkreislaufs befindet, und ein Ventilelement (130), das entlang einer Bewegungsachse zwischen einer ersten Position und einer zweiten Position beweglich ist, zum Dosieren einer Fluidströmung zwischen dem Fluideinlass und dem Fluidauslass des Ventilgehäuses zum Abgeben von Fluid in einen Gasturbinenmotor beinhaltet,
wobei das Fluidventil in dem Zuführungsarm sitzt,
wobei der Auslass des Fluidventils in Fluidkommunikation mit der Fluiddüse steht; und
einen solenoidartigen elektronischen Aktor (120) mit einer Spule, der innerhalb des Ventilgehäuses (102) sitzt,
wobei das Solenoid eine Antriebsachse definiert, die in Bezug auf eine Bewegungsachse des Ventilelements derart abgewinkelt ist, dass das Solenoid einen Abstand von der Düse beabstandet ist und der Einspritzung eine kompakte Anordnung bereitstellt,
wobei der Kipphebel ein erstes Segment (162) und ein zweites Segment (160), das länger als das erste Segment ist, beinhaltet, wobei das erste Segment in Bezug auf das zweite Segment abgewinkelt ist.

2. Einspritzung nach Anspruch 1,
wobei das Dosierventil eine Ventilbuchse (128) mit einem Sitz und einem Drehsicherungsmerkmal beinhaltet, wobei das Ventilelement innerhalb der Ventilbuchse angeordnet ist, wobei das Gestänge (122) schwenkbar an der Ventilbuchse befestigt ist.

3. Einspritzung nach Anspruch 1 oder 2,
wobei das Ventilgehäuse (102) einen Isolationsspalt definiert, wobei sich der Isolationsspalt in Umfangsrichtung um das Dosierventil und um den Fluidkanal erstreckt, und ferner umfassend eine Wärmeabschirmung, die sich um den Zuführungsarm erstreckt und den Isolationsspalt mindestens teilweise überlappt.

4. Einspritzung nach Anspruch 1,
wobei die erste Position und die zweite Position durch eine Vielzahl von eingeplanten Positionen zum proportionalen Ändern der Fluidabgaberate gemäß der Position getrennt sind.

5. Kraftstoffsystem für einen Gasturbinenmotor, umfassend:
eine erste Einspritzung und mindestens eine zweite Einspritzung nach Anspruch 2, wobei die Fluideinlässe der Fluideinspritzungen in Fluidkommunikation mit einer Kraftstoffquelle stehen, wobei die erste Fluideinspritzung und die mindestens eine zweite Fluideinspritzung Folgendes umfassen:
das Solenoid mit einer Spule, das innerhalb des Ventilgehäuses (102) sitzt, wobei sich der Fluidkanal um das Solenoid erstreckt, um das Solenoid unter Verwendung einer Kraftstoffströmung zu kühlen, die den Fluidkanal zwischen dem Fluideinlass und dem Fluidauslass durchströmt; und
das Dosierventil mit dem Ventilelement, das zwischen dem Fluideinlass und dem Fluidauslass angeordnet ist, wobei das Gestänge (122) zwischen einer ersten Position und einer zweiten Position mit dem Ventilelement wirkverbunden ist; und
ein Zeitplanungsprogramm (88), das mit dem Solenoid der ersten Fluideinspritzung und der mindestens einen zweiten Fluideinspritzung verbunden ist und dazu konfiguriert ist, die Fluidströmung durch die erste Fluideinspritzung unabhängig von der Fluidströmung durch die mindestens eine zweite Fluideinspritzung zu variieren.

6. Einspritzung nach Anspruch 1,
wobei das zweite Segment (160) etwa dreimal so lang wie das erste Segment (162) ist oder
wobei das erste Segment in Bezug auf das zweite Segment (160) abgewinkelt ist.

7. Einspritzung nach Anspruch 1,
wobei das zweite Segment (160) ein genutetes Verbindungsstück zum Aufnehmen eines Kraftaufwands entlang einer Aktorantriebsachse aufweist, wobei das erste Segment ein genutetes Verbindungsstück zum Aufbringen des Kraftaufwands entlang einer Belastungsachse aufweist.

8. Einspritzung nach Anspruch 1,
wobei das erste Segment in Bezug auf das zweite Segment (160) innerhalb eines Winkelbereichs zwischen etwa 85 Grad und 130 Grad abgewinkelt ist.

9. Einspritzung nach Anspruch 1,
wobei das Fluidventil ferner das Solenoid mit der Spule umfasst, das innerhalb des Ventilgehäuses (102) sitzt, wobei sich der Fluidkanal um den elektronischen Aktor erstreckt, um den elektronischen Aktor unter Verwendung einer Fluidströmung zu kühlen, die den Fluidkanal zwischen dem Fluideinlass und dem Fluidauslass durchströmt.

10. Einspritzung nach Anspruch 1,
wobei das Solenoid einen Stößel beinhaltet, der entlang einer durch die Spule definierten Antriebsachse beweglich ist, wobei das Gestänge (122) eine Spindel beinhaltet, die entlang der Antriebsachse angeordnet und mit dem Stößel verbunden ist.

11. Einspritzung nach Anspruch 1, wobei der Fluideinlass fluidisch von dem Fluidauslass isoliert ist, wenn sich das Ventilelement in der zweiten Position befindet.

## Revendications

1. Injecteur (100) pour moteur à turbine à gaz, comprenant :
un bras d'alimentation (112) avec une buse de fluide ;
une vanne de dosage (124) comprenant :
un corps de vanne (102) ayant une entrée de fluide (104) et une sortie de fluide (106) ;
un circuit de fluide (118) défini entre l'entrée de fluide et la sortie de fluide ; et
une liaison (122) disposée entre l'entrée de fluide et la sortie de fluide ;
dans lequel la liaison comporte un bras oscillant (154) fixé de manière pivotante au corps de vanne et à l'intérieur du circuit de fluide et un élément de vanne (130) mobile le long d'un axe de déplacement entre une première et une seconde position pour mesurer un écoulement de fluide entre l'entrée de fluide et la sortie de fluide du corps de vanne afin de délivrer un fluide dans un moteur à turbine à gaz,
dans lequel la vanne de fluide est logée dans le bras d'alimentation,
dans lequel la sortie de la vanne de fluide est en communication fluidique avec la buse de fluide ; et
un actionneur électronique de type solénoïde (120) avec une bobine logée à l'intérieur du corps de vanne (102), dans lequel le solénoïde définit un axe d'entraînement qui est incliné par rapport à un axe de déplacement de l'élément de vanne de sorte que le solénoïde est espacé d'une certaine distance de la buse et fournit un agencement compact à l'injecteur,
dans lequel le bras oscillant comporte un premier segment (162) et un second segment (160) qui est plus long que le premier segment, le premier segment étant incliné par rapport au second segment.

2. Injecteur selon la revendication 1,
dans lequel la vanne de dosage comporte un manchon de vanne (128) avec un siège et un élément anti-rotation, l'élément de vanne étant agencé à l'intérieur du manchon de vanne, la liaison (122) étant fixée de manière pivotante au manchon de vanne.

3. Injecteur selon la revendication 1 ou 2,
dans lequel le corps de vanne (102) définit un espace isolant, dans lequel l'espace isolant s'étend de manière circonférentielle autour de la vanne de dosage et autour du canal de fluide, et comprenant en outre un écran thermique s'étendant autour du bras d'alimentation et chevauchant au moins partiellement l'espace isolant.

4. Injecteur selon la revendication 1,
dans lequel la première position et la seconde position sont séparées par une pluralité de positions programmées pour modifier proportionnellement la vitesse de sortie de fluide en fonction de la position.

5. Système d'alimentation en carburant pour un moteur à turbine à gaz, comprenant :
un premier injecteur et au moins un second injecteur selon la revendication 2, les entrées de fluide des injecteurs de fluide étant en communication fluidique avec une source de carburant, le premier injecteur de fluide et l'au moins un second injecteur de fluide comprenant :
le solénoïde avec une bobine logée à l'intérieur du corps de vanne (102), le canal de fluide s'étendant autour du solénoïde pour refroidir le solénoïde à l'aide d'un écoulement de carburant traversant le canal de fluide entre l'entrée de fluide et la sortie de fluide ; et
la vanne de dosage avec l'élément de vanne agencé entre l'entrée de fluide et la sortie de fluide, la liaison (122) étant reliée de manière opérationnelle à l'élément de vanne entre une première position et une seconde position ; et
un programmateur (88) relié au solénoïde du premier injecteur de fluide et à l'au moins un second injecteur de fluide configuré pour faire varier l'écoulement de fluide à travers le premier injecteur de fluide indépendamment de l'écoulement de fluide à travers l'au moins un second injecteur de fluide.

6. Injecteur selon la revendication 1,
dans lequel le second segment (160) est environ trois fois plus long que le premier segment (162), ou
dans lequel le premier segment est incliné par rapport au second segment (160).

7. Injecteur selon la revendication 1,
dans lequel le second segment (160) a un joint fendu pour recevoir un effort le long d'un axe d'entraînement d'actionneur, dans lequel le premier segment a un joint fendu pour appliquer l'effort le long d'un axe de charge.

8. Injecteur selon la revendication 1,
dans lequel le premier segment est incliné par rapport au second segment (160) dans une plage angulaire comprise entre environ 85 degrés et 130 degrés.

9. Injecteur selon la revendication 1,
dans lequel la vanne de fluide comprend en outre le solénoïde avec la bobine logée à l'intérieur du corps de vanne (102), le canal de fluide s'étendant autour de l'actionneur électronique pour refroidir l'actionneur électronique à l'aide d'un écoulement de fluide traversant le canal de fluide entre l'entrée de fluide et la sortie de fluide.

10. Injecteur selon la revendication 1,
dans lequel le solénoïde comporte un piston déplaçable le long d'un axe d'entraînement défini par la bobine, dans lequel la liaison (122) comporte une broche agencée le long de l'axe d'entraînement et reliée au piston.

11. Injecteur selon la revendication 1, dans lequel l'entrée de fluide est isolée de manière fluidique de la sortie de fluide lorsque l'élément de vanne est dans la seconde position.
